# FASCICULE DE BREVET EUROPEEN

(11) **EP 0 414 595 B1**
(45) Date de publication et mention de la délivrance du brevet: **22.05.1996**
(21) Numéro de dépôt: 90402305.8
(22) Date de dépôt: 17.08.1990
(51) Int. Cl.: B23K 9/028, B23K 9/08

(54) **Méthode de soudage par balayage**
Verfahren zum Schweissen durch Lichtbogenablenkung
Method for welding by arc deflection

(30) Priorité: 21.08.1989 US 397102
(43) Date de publication de la demande: 27.02.1991
(73) Titulaire: VALEO ENGINE COOLING, INC., Jamestown, New York 14702-0829 (US)
(72) Inventeur: Monteleone, John, Jamestown, New York (US)
(74) Mandataire: Lemaire, Marc

(56) Documents cités:
- EP-A- 0 003 590
- EP-A- 0 046 428
- DE-A- 2 602 513
- DE-A- 3 209 233
- DE-B- 2 339 818
- US-A- 3 626 145
- US-A- 3 675 841
- US-A- 4 219 722
- US-A- 4 319 113
- US-A- 4 511 784

## Description

La présente invention est relative au soudage des tubes d'échange de chaleur au collecteur d'un équipement comme un corps de radiateur d'automobile. D'une manière plus précise, elle propose une méthode de soudage par balayage d'une rangée d'extrémités de tubes faisant saillie par des orifices pratiqués dans le collecteur et, de cette façon, souder les extrémités de tube au collecteur sur tout le pourtour du tube.

On sait que, dans l'état actuel de la technique, pour souder des tubes du corps de radiateur à un collecteur qui présente des orifices dans lesquelles sont engagées les extrémités des tubes, on utilise la soudure par arc électrique.

Selon l'art antérieur, l'appareil à souder suit le tracé, en tournant autour du périmètre complet, d'un joint d'assemblage de forme généralement ovale formé par l'extrémité généralement ovale du tube faisant saillie par un orifice pratiqué dans le collecteur. Les extrémités des tubes forment généralement un ensemble de rangées de soudures ovales et l'appareil à souder, dans l'état de la technique, soumis à des combinaisons variées commandées manuellement ou automatiquement, positionne l'extrémité de la tête de soudage sur un point de départ fixé sur l'ovale, amorce l'arc, puis suit le tracé tout le long du pourtour du tube ovale pour effectuer le soudage. La tête de soudage est ensuite déplacée sur un second ovale et le cycle de soudage est répété. Il est classique d'effectué ce procédé de soudage dans un environnement de gaz inerte Tungstène (TIG).

Une telle technique de soudage au tracé peut poser un problème en ce sens qu'elle peut produire des soudures poreuses donc faibles et favorisant les fuites. Le laiton, formé d'environ 70% de cuivre et de 30% de zinc, est couramment utilisé pour fabriquer à la fois les collecteurs et les tubes. Du fait que les températures de soudage qui apparaissent dans le procédé du soudage au tracé peuvent atteindre les 5.580°C (10,000°F), une quantité de chaleur relativement importante est appliquée à la soudure. Le zinc a tendance à bouillir et à laisser le cuivre relativement poreux, d'ou il résulte une soudure faible. Un apport ultérieur d'étain à braser sur les soudures pour renforcer l'assemblage est donc souvent nécessaire. Même après ceci, quand le corps du radiateur est soumis aux contraintes thermiques, mécaniques et de pression inhérentes au fonctionnement des moteurs de véhicule, des fuites et des pannes apparaissent à une fréquence indésirable.

De plus, la technique de soudage au tracé peut être fastidieuse et inefficace, une des raisons étant que chaque ovale doit être tracé un par un et que le tête de soudage doit chaque fois être positionnée avec soin sur chaque ovale. Reposant sur l'application de l'opérateur, que celui-ci soit manuel ou commandé par ordinateur, tout défaut d'uniformité sur la forme et la taille des ovales peut conduire à un défaut d'alignement de la tête de soudage et à des assemblages soudés en-dessous de la qualité optimale. Une précision accrue s'obtiendra au prix d'une vitesse d'exécution réduite.

Les appareils à souder au tracé en l'état actuel de la technique, en raison de la précision requise et de la relativement faible marge d'erreur permise, peuvent être d'un coût relativement élevé. De plus, de tels appareils produisent souvent des corps de radiateur à une cadence relativement lente, lesquels corps peuvent avoir besoin d'une soudure de renforcement, désavantage qui grève encore le coût.

Les brevets américains N° 4.425.491 ; 4.319.113 ; et 3.675.841 font état d'une variété d'appareils et de méthodes pour exécuter des opérations de soudage comme, par exemple, de soudage continu d'une série de tubes à une plaque à tube.

Les techniques actuelles font également état du soudage de pièces sous le contrôle d'un champ magnétique, qui peut être utilisé pour déplacer l'arc électrique. Voir, par exemple, les brevets américains N° 4.443.686 ; 4.246.464 ; 4.278.868 ; 4.511.784 ; et 3.626.145.

D'après le document intitulé "Advanced welding systems" vol.3 "TIG and related process" 1988, John Weston, Bedford, page 38-44, il est connu une technique de soudage d'une rainure en V dans laquelle un arc électrique se déplace dans une direction correspondante à la périphérie de deux pièces à réunir et subit un mouvement oscillatoire de manière à pouvoir faire varier en quantité et en qualité le cordon de soudure, ce mouvement oscillatoire se faisant en suivant la direction périphérique de l'arc électrique.

En conformité avec la présente invention, il est proposé une méthode pour souder un ensemble de tubes à une plaque à tubes dans laquelle une extrémité de tube formée par l'extrémité du tube fait saillie par un orifice de la dite plaque pour former un joint d'assemblage pour souder ledit tube à ladite plaque dans la zone dudit orifice, ladite méthode comprenant les phases suivantes :
a) déplacement d'un arc électrique dans une direction choisie le long d'un cheminement à parcourir pour effectuer une soudure le long desdits joints d'assemblage où ledit arc touche lesdits joints ;
b) simultanément avec la phase a), animation de l'arc d'un mouvement alternatif d'avant en arrière dans une direction perpendiculaire par rapport à ladite direction choisie avec une amplitude du va-et-vient suffisante pour toucher au moins une partie dudit joint placée sur au moins un côté dudit cheminement pour de plus, former une surface soudée le long dudit joint tandis que ledit arc se déplace dans ladite direction choisie, par ce moyen la soudure d'au moins une partie dudit joint pouvant s'effectuer aussi bien sur le côté que le long dudit cheminement ;
c) animation de l'arc d'un mouvement de va-et-vient de chaque côté dudit cheminement avec une amplitude suffisante pour souder ledit joint tout autour de ladite extrémité du tube, ledit tube étant formé autour d'un axe central, et ledit cheminement étant généralement centré pour passer par ledit axe adjacent à ladite extrémité de tube.

La méthode de soudage par balayage utilise le courant alternatif de préférence au courant continu comme courant de soudage.

De plus, l'appareil à souder par balayage est équipé d'une tête de soudage, de moyens pour déplacer ladite tête le long d'une rangée d'extrémités de tube, et d'un générateur de lignes de flux magnétique provoquant l'oscillation de l'arc de soudage d'avant en arrière dans une direction perpendiculaire au chemin suivi par la tête de soudage.

L'un des buts visés par la présente invention est de fournir une méthode de soudage par balayage pour souder une série de rangées d'extrémités de tube à un collecteur qui évite la fastidieuse nécessité de tracer chaque assemblage à souder l'un après l'autre.

Un des buts complémentaires visés par la présente invention est de fournir une méthode de soudage par balayage pour souder une série des rangées d'extrémités de tube à un collecteur avec lequel la tête de soudage peut être déplacée d'avant en arrière selon un mode de balayage linéaire sur les extrémités de tubes plutôt que selon un mode de traçage des soudures les unes à la suite des autres.

Un des buts complémentaires visés par la présente invention est de fournir une méthode de soudage par balayage pour souder en série des rangées d'extrémités de tube à un collecteur avec lequel une soudure plus complète et plus continue est obtenue.

Les buts complémentaires et les avantages de la présente invention seront explicités selon la description des croquis et des réalisations préférentielles.
La figure 1 est une représentation graphique schématique vue de dessus illustrant la méthode de soudage par balayage ;
La figure 2 est une représentation graphique schématique illustrant la méthode de soudage par balayage appliquée à une rangée de tubes que l'on trouve de façon classique dans les corps de radiateur pour automobile ;
La figure 3 est une vue perspective d'une des réalisations préférentielles proposées pour exécuter le soudage par balayage ;
La figure 4 est un bloc diagramme de l'appareil à souder par balayage objet de la présente invention ;
La figure 5 est une vue plus détaillée d'un aspect de l'appareil à souder par balayage de la figure 3 ;
La figure 6 est une vue de dessus d'une extrémité de tube soudée à un collecteur ; et
La figure 7 est une vue de côté de la figure 5.

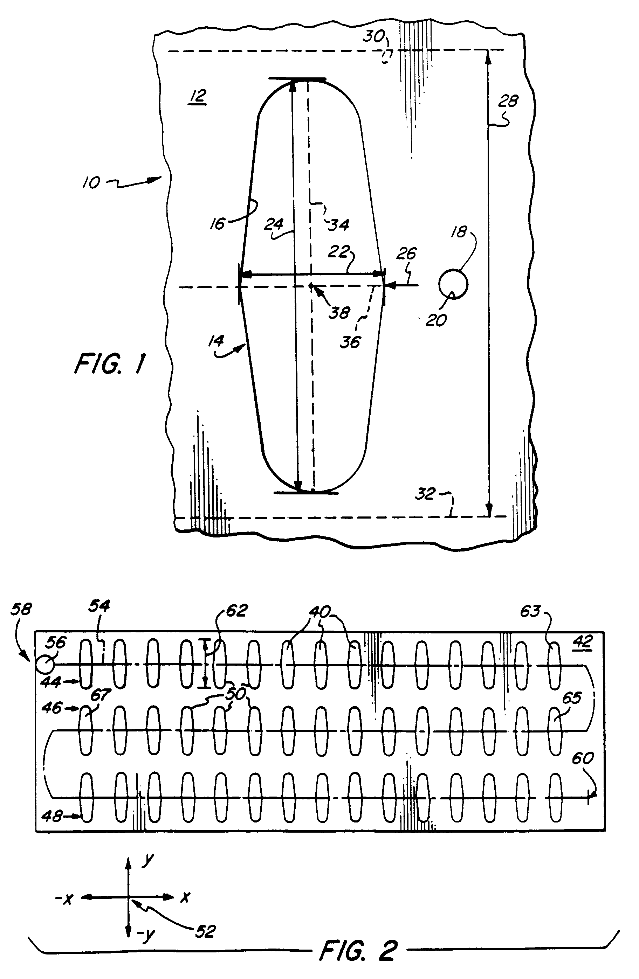

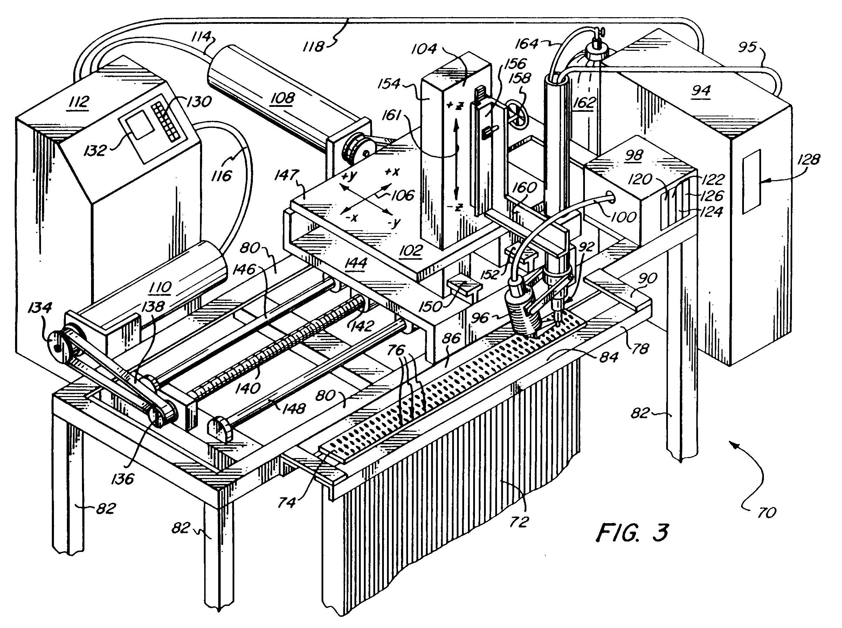

Sur la figure 1, le chiffre 10 identifie une petite section d'un échangeur de chaleur comme par exemple un corps de radiateur pour véhicule avec une plaque à tubes 12 comme par exemple celle d'un collecteur de radiateur avec une seule extrémité de tube 14 y faisant saillie. Une ligne 16 jalonne une forme généralement ovale qui correspond à la ligne où l'assemblage doit être soudé par un arc électrique 18 représenté par le cercle 20, comme par exemple par un arc électrique produit par un courant et une tension électriques convenables fournis par une torche non représenté ici (voir figure 3 ci-après). L'arc 18 produira une surface soudée le long de la partie de la ligne d'assemblage 16 partout où l'arc touche cet assemblage, généralement à l'intérieur ou dans un région proche dudit cercle 20.

Dans l'état actuel de la technique du soudage par tracé, l'arc 18 serait positionné par déplacement de la torche pour amener l'arc 18 en un point choisi sur la ligne d'assemblage 16 puis pour tracer de façon continue un ovale complet le long de la ligne d'assemblage 16. La nature fastidieuse d'une telle tâche peut facilement être appréciée et les chances d'erreur sont ici clairement apparentes, lorsqu'on sait que les extrémités de tubes classiques ont leur petit diamètre 22 qui ne mesure que 5 mm (0,200 inch) environ, leur grand diamètre 24 environ 15,24 mm (0,600 inch) et qu'on peut compter plusieurs centaines de tubes pour chaque corps de radiateur.

Dans la méthode de soudage par balayage de la présente invention, l'arc 18 se déplace - non pas autour du joint d'assemblage 16 - mais plutôt par le travers de l'extrémité du tube 14 dans un une première direction choisie généralement linéaire sur l'axe de déplacement indiquée de façon générale par la flèche 26 à une vitesse prédéterminée généralement constante, tandis que, dans le même temps, l'arc 18 est balayé d'avant en arrière dans une direction transversale comme l'indique la flèche à double sens 28 avec un mouvement alternatif ou oscillant d'une amplitude indiquée par les lignes pointillées 30 et 32 suffisante pour toucher le joint d'assemblage par son grand diamètre 34 et sur tout le pourtour de la paroi du tube ovale tandis que l'arc 18 se déplace le long du petit diamètre 36 de l'extrémité du tube 14. En d'autres termes, une soudure dont la surface qui, au lieu de correspondre seulement aux points où le cercle 20 de diamètre relativement petit touche le joint d'assemblage 16, est élargie pour inclure toute portion du joint comprise entre les lignes 30 et 32.

Si l'arc 18 est un arc à souder électrique, ce qui est le cas pour la réalisation préférentielle, on peut faire varier la tension et le courant en conjonction tandis que sont commandées d'autre part la vitesse de déplacement correspondante au petit diamètre 36 et la fréquence des oscillations d'avant en arrière dans la direction de la flèche 28 afin d'obtenir la surface de soudure désirée compte tenu des types de collecteur et de tubes utilisés. D'autres variables pouvant subir un réglage sont les temps d'arrêt momentanés de droite et de gauche quand l'arc s'arrête temporairement aux points extrêmes droit et gauche de son oscillation en direction de la flèche 28.

La figure 1 illustre la méthode préférentielle dans laquelle l'arc 18 se déplace en ligne droite le long du petit diamètre 36 de l'extrémité du tube 14 par l'axe central 38 autour duquel le tube est formé, tandis que, simultanément, l'arc 18 oscille selon les directions 28 perpendiculaires à la direction 26. Cependant, la méthode de soudage par balayage peut s'effectuer avec des variantes qui sont dans le domaine d'application de la présente invention. Par exemple, l'arc 18 peut se déplacer dans la première direction autrement que la ligne droite tandis qu'il subit un mouvement alternatif généralement transversal qui n'est pas nécessairement perpendiculaire à ladite première direction mais n'avoir qu'un de ses composant normal à ladite première direction. Ou, à titre d'autre exemple, l'arc 18 peut aussi suivre un axe de déplacement qui passe à travers ledit tube par un autre point que son centre 38. En fait, l'axe de déplacement n'a même pas besoin de passer par l'extrémité du tube 14 si le mouvement transversal a une amplitude suffisante pour toucher le joint d'assemblage 16. Aussi, si l'amplitude du mouvement alternatif ne permet pas à l'arc 18 de toucher la totalité du joint d'assemblage 16 pendant que l'arc 18 traverse le petit diamètre 22, l'arc 18 devra alors faire plus d'un passage près ou à l'intérieur de l'extrémité du tube 14. De même, il n'est pas nécessaire de donner à l'arc 18 un mouvement de va-et-vient symétrique par rapport à la tête de soudage, on peut le faire osciller d'avant en arrière seulement sur un côté.

La figure 2 montre un faisceau d'extrémités de tubes 40 comme on en trouve dans un collecteur de radiateur 42. Les extrémités de tube 40 sont disposées dans une zone rectangulaire selon trois rangées 44, 46 et 48, parallèles et habituellement droites, d'extrémités de tube 40 dans un plan correspondant au collecteur 42, sur lequel chaque ovale, comme celui marqué 50, indique la place d'un joint d'assemblage à souder. Pour rendre la description plus facile, le collecteur 42 et les rangées 44, 46 et 48 sont repérés dans un cadre de référence x-y numéroté 52. La ligne en pointillés 54 indique le chemin suivi par l'arc 56 à une vitesse constante prédéterminée depuis une position 58 de départ ou de repos à une position 60 d'arrêt ou de fin de mouvement.

L'arc 56 se déplace à une vitesse choisie ou un rythme de déplacement dans la direction +x le long de la rangée 44 tandis qu'il est mis en oscillation d'avant en arrière d'abord dans la direction +y puis dans la direction -y avec une amplitude suffisante pour toucher chaque joint d'assemblage 50 sur tout son périmètre. Une fois que l'arc est parti de sa position de départ 58, il n'est pas éteint jusqu'à son arrivée au point d'arrêt 60, mais il se déplace de façon continue le long de la rangée 44 tout en subissant le balayage d'avant en arrière dans une direction transversale jusqu'à ce que l'extrémité du dernier tube 63 soit soudée. L'arc 56 est alors transféré dans la direction -y vers la rangée 46 et commence par l'extrémité du tube 65 et, se déplaçant dans la direction -x, finit la rangée 46 avec le tube 67, et ainsi de suite dans un mode balayage. Le balayage se termine dans la direction +x pour la rangée 48 à la position d'arrêt 60.

Il est entendu que, si l'amplitude du mouvement alternatif transversal est trop petite pour la taille du tube, plusieurs passages doivent alors être effectués pour chaque rangée. De même, on comprendra que la technique de soudage par balayage n'est pas limitée à une zone rectangulaire, mais peut aussi être appliquée à toute zone de toute forme même celle résultant d'un arrangement irrégulier des extrémités de tube. En réalité, la méthode de soudage par balayage produit de part et d'autre du déplacement de l'arc une bande de soudure dont la largeur est déterminée par l'amplitude du mouvement alternatif et le déplacement peut être simplement fixé pour chaque point qu'il est nécessaire d'atteindre sur le collecteur soit, à un moment donné, un point quelconque inclus dans la bande de soudure.

La figure 3 montre la réalisation préférentielle d'un appareil, repéré par le chiffre 70, de soudage par balayage utilisant la méthode de soudage par balayage, objet de la présente invention. Un corps de radiateur 72 ayant une plaque à tubes comme un collecteur 74 et des extrémités de tube 76 y faisant saillie dans une zone rectangulaire selon trois rangées parallèles, est monté dans un châssis 78 fixé sur un bâti support 80 destiné à être placé sur une surface horizontale comme un plancher. Les montants 82 ont une hauteur suffisante pour permettre la fixation du corps de radiateur 72 dans le châssis 78 qui comprend des longerons longitudinaux parallèles 84 et 86 tenus écartés comme il convient par les traverses 88 et 90 de façon à maintenir le corps 72. Une tête 92 de torche à souder par arc électrique classique alimentée par le câble 95 à partir d'une source d'énergie classique 94 et une bobine électromagnétique 96, pilotée par un contrôleur classique 98 d'arc magnétique au moyen du câble 100, sont montés sur une table classique en x-y 102 par un ensemble de pattes d'attache et de d'engrenages adéquats dénommés ensemble 104. La table en x-y 102 fournit les moyens pour déplacer la tête de la torche 92 d'un mouvement de balayage dans les axes de référence x-y désignés en 106 grâce aux servo-moteurs 108 et 110 répondant aux ordres d'un ordinateur logique programmable (PLC) 112 transmis respectivement par les câbles 114 et 116. L'ordinateur logique programmable 112 peut aussi commander la source d'énergie 94 en commutant les positions "marche" et "arrêt" via le câble 118.

Dans la réalisation préférentielle, mais seulement à titre d'exemple, le contrôleur 98 d'arc magnétique, qui fournit les moyens pour donner un mouvement alternatif audit arc en produisant un flux magnétique, est un contrôleur Cyclomatic modèle 80A vendu par la Cyclomatic Industries Inc. de San Diégo, Californie. Il possède un système de contrôle réglable comprenant des interrupteurs à molette 120,122,124 et 126 correspondant à l'amplitude, l'arrêt à gauche, la vitesse et l'arrêt à droite qui seront explicités ci-après. Le contrôleur 98 fournit un champ magnétique en mesure de faire osciller et de positionner un arc à souder. Il est entendu que tout autre méthode capable de contrôler un arc peut être utilisée.

La source d'énergie classique 94 est, dans la réalisation préférentielle, un moyen pour générer un courant électrique de soudage et, à titre d'exemple seulement, on peut utiliser un Syncrowave 250 fabriqué par Miller d'Appleton, Wisconsin, capable de fournir un courant de soudage a.c. (courant alternatif) dans les domaine de 0 à 250 ampères pour une tension de crête à crête de 0 à 70 volts. Parmi les autres dispositifs classiques de contrôle, la source d'énergie 94 a un commutateur de sélection 128 pour régler l'intensité du courant fourni à la tête 92. Il est naturellement bien entendu que toute autre source de courant peut être utilisée.

L'ordinateur logique programmable 112 fournit les moyens pour piloter la table x-y afin de déplacer la tête 92 de la torche sur des modes de balayage présélectionnés ; c'est, ici, un Fagor classique modèle 820GP fabriqué par Fagor Co. de Elk Grove Valley, Illinois qui comprend un clavier classique 132 associé à un écran à tube cathodique (CRT) 132 permettant à l'opérateur de sélectionner les modes opératoires à partir d'un menu apparaissant sur l'écran 132. L'ordinateur logique programmable, grâce aux servo-moteurs 108 et 110, commande le déplacement de la tête 92 par balayage de la tête 92 le long des rangées d'extrémités de tube suivant un parcours prédéterminé et programmé comme celui montré avec la référence 54 dans la Figure 2. Le déplacement de la tête de la torche aussi bien que sa vitesse sont facilement contrôlables d'une manière classique par une programmation de routine de l'ordinateur logique programmable 112. L'ordinateur logique programmable 112 peut être programmé avec un ensemble de coordonnées x-y et une loi de vitesses de tête de torche pour chaque type de corps de radiateur à souder. L'opérateur renseigne l'ordinateur logique programmable 112 sur le type de corps installé dans le châssis 78 au moyen du clavier 130 en utilisant les instructions à la portée de l'utilisateur apparaissant sur l'écran 132. Un autre ordinateur logique programmable classique peut bien entendu être utilisé.

Le moteur 110 par l'intermédiaire de la paire de poulies 134, 136 et de la courroie de transmission 138 fait tourner la tige filetée 140 qui, en agissant sur le chariot d'adaptation 142, déplace la table inférieure 144 d'avant en arrière dans la direction-x en la faisant glisser sur la paire de tiges à coulisser 146, 148. La table supérieure 147 avec le moteur 108 et un système de transmission adéquat (non montré) assure le mouvement dans la direction-y sur les coulisseaux 150, 152. Le fonctionnement d'une telle table x-y classique est bien connue et ne demande pas ici d'être expliquée plus en détail.

Le montant droit vertical 154 supporte un système élévateur classique comme par exemple une crémaillère 156 déplacée à la main au moyen d'un volant 158 et solidaire du montant de fixation 160 pour monter et descendre la torche 92 dans la direction-z indiquée en 161 pour régler l'espacement de soudage entre l'électrode et l'assemblage tube/collecteur au point de soudure. Cet écart est classiquement de 15,88 mm (5/8 d'inch) environ.

Un réservoir classique de gaz 162 fournit par la canalisation 164 l'environnement TIG pour les opérations de soudage selon le procédé bien connu dans l'état actuel de la technique.

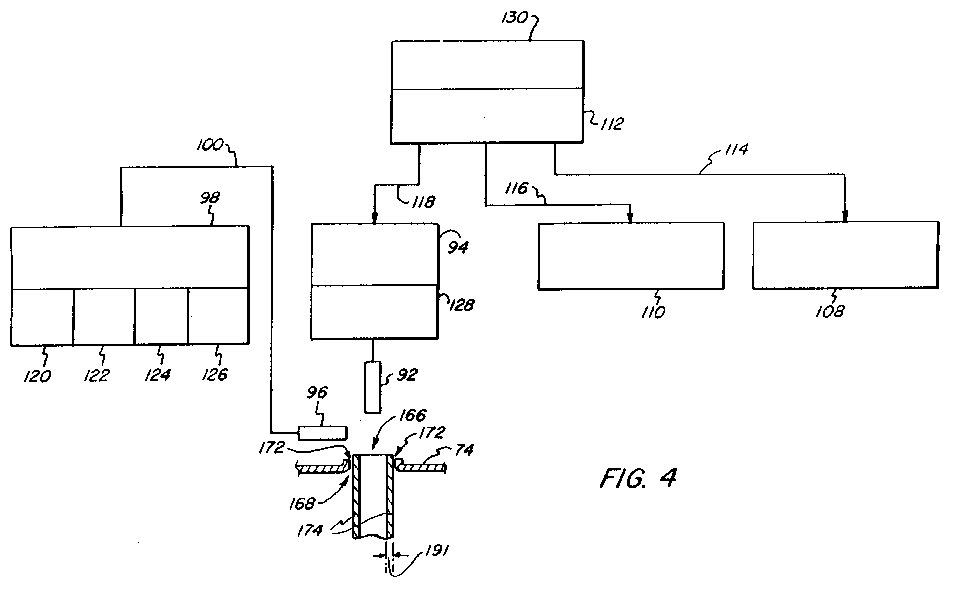

La figure 4 est un bloc diagramme illustrant davantage l'appareil à souder par balayage de la Figure 3. Les numéros des équipements correspondants sur les deux Figures sont les mêmes. Dans la figure 4, la torche 92 et la bobine électromagnétique 96 sont ici positionnés à proximité d'une extrémité type d'un tube 166 faisant saillie par un orifice ou collet 168 pratiqué dans le collecteur 74 pour former un joint d'assemblage par soudage 172 sur la circonférence de la paroi latérale 174 du tube.

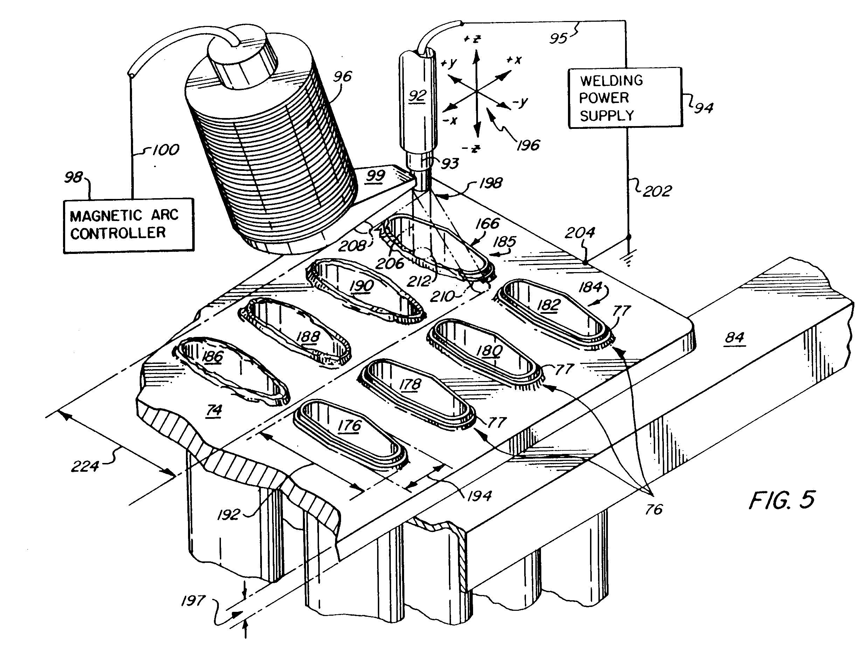

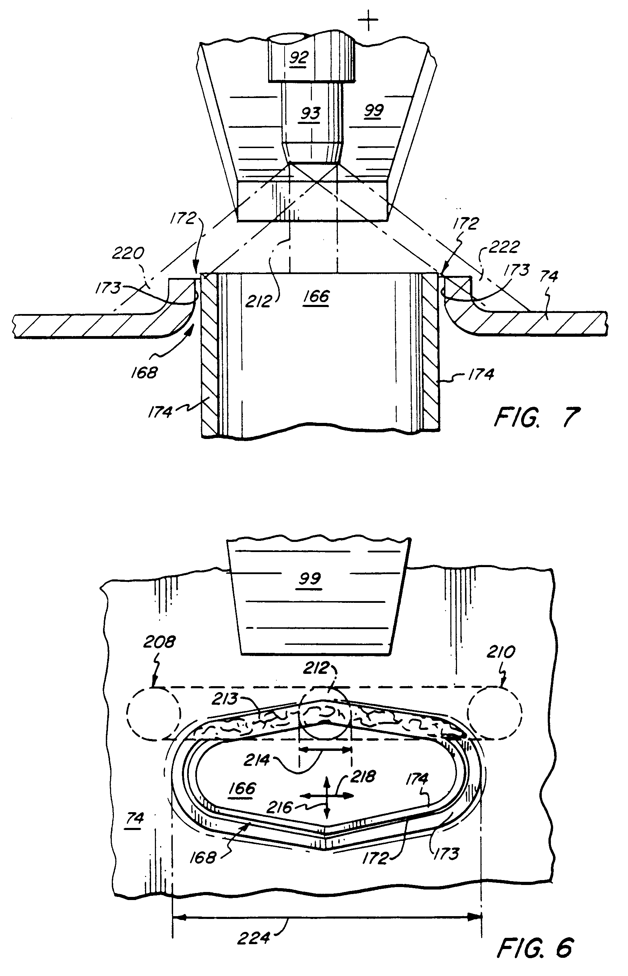

En se rapportant maintenant à la Figure 5, on trouve un collecteur 74 avec un ensemble d'extrémités de tube repéré de façon générale par le chiffre 76, faisant saillie par les collets comme les collets marqués 77 sur le collecteur 74. Les extrémités de tube 176, 178, 180 et 182 de la rangée 184 n'ont pas encore été soudés, tandis que les extrémités de tube 186, 188 et 190 ont été soudés de façon à présenter une surface soudée sur tout le périmètre de chaque tube. L'extrémité de tube 166 est en cours de soudage et sera montré avec plus de détails dans les vues de dessus et de côté représentées respectivement sur les figures 6 et 7 et décrites ci-dessous.

Dans les corps de radiateur classique, les tubes et les collecteurs sont tous les deux fabriqués à partir de laiton constitué pour l'essentiel de 70% de cuivre et 30% de zinc, cependant la méthode de soudage par balayage objet de la présente invention s'applique aussi à d'autres métaux qui conviennent à cette fabrication comme le laiton rouge (pour l'essentiel, 85% de cuivre et 25% de zinc) ou l'aluminium. Les tubes types ont une épaisseur de paroi (voir Figure 5) essentiellement comprise entre 0,178 et 0,229 mm (0.007 et 0.009 inch), un grand diamètre extérieur compris entre 14,732 et 15,748 mm (0.580 et 0.620 inch), et un petit diamètre extérieur d'une valeur essentiellement prise autour de 5,08 mm (0.200 inch). Les tubes ne sont pas nécessairement ovales et peuvent prendre n'importe quelle forme. Le collecteur 74 est formé à partir d'une tôle dont l'épaisseur 197 se trouve dans le domaine compris entre 0,76 et 1,626 mm (0.030 et 0.064 inch). Seules les rangées 184 et 185 d'extrémités de tube figurent sur la figure 5, mais il est bien entendu que les rangées peuvent s'étendre davantage dans toutes les directions du plan x-y défini par les axes de référence 196.

La tête de la torche à souder 92 comprend une électrode classique 93 séparée des tubes et de la pièce du collecteur à souder par un espacement de soudage 198. La source d'énergie 94 fournit une différence de potentiel de soudage d'arc électrique entre l'écartement 198, avec la ligne ou câble de masse 202 connecté électriquement en 204 au collecteur 74 et la ligne 95 reliée électriquement à l'électrode 93.

Un générateur de flux magnétique comme un oscillateur magnétique ou un contrôleur d'arc électrique 98 comprend une bobine magnétique 99 destinée à produire un champ magnétique dans la zone de l'électrode 93 sur la Figure 5. En faisant varier la puissance ou la densité des lignes de flux magnétique grâce à un circuit de commande classique convenable du contrôleur 98, l'arc électrique de soudage représenté par un rayon cylindrique 206 peut être soumis à une oscillation d'avant en arrière dans une direction transversale entre deux positions extrêmes droite et gauche représentées en lignes pointillées pour couvrir le joint d'assemblage à souder disposée entre ces deux positions. Pour la clarté de la Figure, les lignes du flux magnétique ne sont pas représentées, mais l'utilisation d'un flux magnétique pour contrôler un arc électrique est une technique actuelle bien connue.

La figure 6 montre une extrémité de tube 166 et la région avoisinante du collecteur par une vue de dessus tandis que la figure 7 est une vue de côté. Le collecteur 74 présente un orifice ou collet 168 de forme généralement ovale pratiquée dans sa paroi. L'extrémité du tube 166 fait saillie par cet orifice et sa paroi tubulaire 174 forme un joint d'assemblage à souder 172 avec le bord 173 de la partie découpée vers le haut du collecteur 74. Il est bien entendu que, compte-tenu de l'orientation précise donnée à l'extrémité de tube 166, la paroi tubulaire 174 touchera probablement en de nombreux points le bord 173.

La zone active de soudage de l'arc 206 est représentée par le cercle 212 dont le diamètre figure en 214. Il est entendu que l'arc de soudage actuellement décrit peut ne pas avoir cette configuration, celui-ci est pris ici pour faciliter la description. Si la tête de soudage 92 était déplacée uniquement dans la direction de la flèche 216, la surface de soudage créée n'aurait qu'une largeur équivalente à peu près à celle du cercle de diamètre 214. Mais, par l'action de la bobine 99 qui, en même temps, impose à l'arc 206 un mouvement alternatif ou oscillant d'avant en arrière dans les directions-y imprimant un mouvement de balayage indiqué par la flèche 218, une surface de soudage plus large 213 et une bande de soudage mentionnée de façon générale par le repéré 214 peuvent être produites. Comme la tête de soudage 92 est ainsi déplacée dans la direction-x, une bande de soudage élargie est formée. Donc, toute une rangée d'extrémités de tube comme on la voit dans la figure 2 peut être soudée par un seul passage de la tête de soudage 92.

La commande de l'amplitude 120 de l'appareil de contrôle 98 peut servir à faire varier la densité du flux magnétique ; le contrôle de vitesse 124 permet d'ajuster la fréquence à laquelle l'arc oscille ou balaye transversalement ; les contrôles d'arrêt droit et gauche 126 et 122 ajustent les temps d'arrêt momentané ou temps de pose aux positions extrêmes respectives droite et gauche 220 et 222.

De la même manière, la longueur 224 de la bande de soudage créée par la tête de soudage 92 peut facilement être modifiée. Par exemple, la bande de soudage 224 peut être réduite de moitié, deux passages de la tête étant alors nécessaires pour chaque rangée. Il est aussi possible, si on le souhaite, d'ajuster les passages de façon à opérer un recouvrement dans les coulées de soudure.

La façon de programmer l'ordinateur logique programmable 112, pour imposer à la table x-y de produire des types de balayages différents, est bien connue de la technique actuelle. De même, différents arrangements d'extrémités de tube peuvent facilement être adaptés au type de balayage. La vitesse de déplacement de la tête de soudage le long des cheminements de soudage peut de la même façon être programmée par l'ordinateur logique programmable 112.

Le courant de soudage correct à fournir par la source d'énergie 94 est choisi par la commande de contrôle 128.

Le soudage par balayage de corps de radiateur différents faits de tailles et de matériaux divers réclament des paramètres de fonctionnement de l'appareil particuliers. On a trouvé que pour les collecteurs et les extrémités de tube faits de laiton (pratiquement environ 70% de cuivre et 30% de zinc), avec des épaisseurs de collecteurs pratiquement comprises entre 0,762 et 1,270 mm (0.030 et 0.050 inch) et des épaisseurs de paroi latérale de tube pratiquement comprises entre 0,178 et 0,229 mm (0.007 et 0.009 inch), la vitesse de déplacement de la tête de soudage doit être comprise entre 2.226 et 3.048 mm (90 à 120 inches) par minute et que le courant compris entre 150 et 160 ampères sous une tension d'environ 33 volts de crête à crête, avec un espacement de soudage d'environ 15,88 mm (5/8 inch). La fréquence d'oscillation latérale et la valeur des temps d'arrêt sont réglés pour obtenir une soudure convenable tout le long d'une bande de soudage d'une longueur choisie.

Pour les collecteurs et les tubes d'aluminium avec un collecteur dont l'épaisseur est pratiquement de l'ordre de 1,52 mm (0.060 inch) et avec des épaisseurs de paroi latérale de tube pratiquement de 0,229 mm (0.009 inch) environ, le courant de soudage est de l'ordre de 75 à 80 ampères sous une tension de 18 à 20 volts de crête à crête et une vitesse de déplacement de la tête de soudage d'environ 2.226 mm (90 inches) par minute.

On a constaté que les corps de radiateur pour automobile fabriqués par la méthode et l'appareil, objets de la présente invention, sont fabriqués plus efficacement et plus rapidement que par la méthode de soudage par traçage de la technique actuelle ; que les corps soudés par balayage ont des résultats meilleurs aux tests thermiques et de pression ; que l'intégrité métallographique de la soudure produite s'en trouve, de ce fait, améliorée ; et que la nécessité de remplissage complémentaire par apport d'étain sur le côté air du collecteur est réduite dans le cas des collecteurs soudés par balayage.

Par exemple, au cours d'une procédure classique de test de résistance, deux corps de radiateur soudés par balayage sans apport d'étain côté air, ont été soumis à des tests thermiques et cyclés entre 12 et 90°C ( 55 et 195 degrés Fahrenheit) à une fréquence de 40 cycles par heure. Les deux corps ont subis 4.490 cycles sans fuite au moment où les tests ont été stoppés. Les spécifications industrielles classiques ne sont que de 3.000 cycles sans fuite. De plus, un corps de radiateur soudé selon la méthode de traçage actuel aurait eu besoin d'un apport supplémentaire de soudure pour atteindre une telle résistance thermique.

Dans le test de cycles de pression, deux corps soudés par balayage ont été cyclés entre 0 et 1,24 bar à la température de 121°C (250°F) à raison de 7 cycles par minute. Un corps a présenté une fuite après 63.942 cycles tandis que le second résistait jusqu'aux 101.942 cycles sans fuite au moment où les tests étaient stoppés. Les résultats typiques au test de pression sont de l'ordre de 80.000 à 90.000 cycles sans fuite pour le corps soudés par balayage. En comparaison, les standards industriels n'imposent que 25.000 cycles sans fuite.

Il doit être bien entendu que la méthode de soudage par balayage de la présente invention peut être exécuté aussi bien avec un gaz métallique inerte (MIG) qu'avec un environnement de gaz inerte Tungstène. De même, alors que la réalisation préférentielle utilise une commande magnétique de l'arc pour le mouvement alternatif transversal, on peut tout aussi bien obtenir ce mouvement de balancement d'un côté à l'autre par d'autres moyens, comme des moyens mécaniques par exemple. Si de tels moyens mécaniques sont utilisés, une méthode de soudage par acétylène peut aussi être employée.

Il est de plus entendu que les termes comme "haut", "bas", "droit", "gauche","devant" et "derrière" sont utilisés seulement pour indiquer des positions relatives et ne peuvent limiter le champ d'application de la présente invention.

Il doit être également compris que des changements et des modifications apportées à la réalisation préférentielle décrite ci-dessus seront manifestement de ceux connus dans l'état de la technique. De tels changements et modifications peuvent être faits sans changer l'esprit et le champ d'application de la présente invention et il est donc entendu que ces changements et ces modifications seront couverts par les revendications qui suivent.

## Revendications

1. Méthode pour souder un ensemble de tubes à une plaque à tubes (12,42,72) dans laquelle une extrémité de tube (14,40,76) formée par l'extrémité du tube fait saillie par un orifice de la dite plaque pour former un joint d'assemblage (16,50) pour souder ledit tube à ladite plaque dans la zone dudit orifice, ladite méthode comprenant les phases suivantes :
a) déplacement d'un arc électrique (18,56) dans une direction (26) choisie le long d'un cheminement à parcourir pour effectuer une soudure le long desdits joints d'assemblage où ledit arc touche lesdits joints ;
b) simultanément avec la phase (a), animation de l'arc d'un mouvement alternatif d'avant en arrière dans une direction perpendiculaire (28) par rapport à ladite direction choisie avec une amplitude (30,32) du va-et-vient suffisante pour toucher au moins une partie dudit joint placée sur au moins un côté dudit cheminement pour de plus, former une surface soudée le long dudit joint tandis que ledit arc se déplace dans ladite direction choisie, par ce moyen la soudure d'au moins une partie dudit joint pouvant s'effectuer aussi bien sur le côté que le long dudit cheminement ;
c) animation de l'arc (18,56) d'un mouvement de va-et-vient de chaque côté dudit cheminement avec une amplitude suffisante pour souder ledit joint tout autour de ladite extrémité du tube, ledit tube étant formé autour d'un axe central, (38) et ledit cheminement étant généralement centré pour passer par ledit axe adjacent à ladite extrémité de tube.

2. Méthode selon la revendication 1, dans laquelle un ensemble de tubes ayant une extrémité (14,40,76) faisant saillie par ladite plaque (12,42,72) doivent être soudés à ladite plaque, et ledit cheminement étant choisi pour permettre audit arc (18,56) de toucher lesdites extrémités de tube l'une après l'autre.

3. Méthode selon l'une des revendications 1 ou 2, dans laquelle ledit ensemble de tubes forme un arrangement régulier et ledit cheminement est choisi pour correspondre audit arrangement afin de permettre audit arc (18,56) de toucher successivement lesdites extrémités de tube (14,40,76).

4. Méthode selon l'une des revendications précédentes, dans laquelle lesdites extrémités de tube (14,40,76) sont disposées dans un arrangement rectangulaire formant un ensemble de rangées d'extrémités de tube (44,46,48), et ledit cheminement est choisi de façon à ce que ledit arc (18,56) se déplace le long d'une première rangée puis successivement le long des autres rangées, ladite amplitude étant suffisante pour souder chaque extrémité de tube à ladite plaque tout autour de chaque joint d'assemblage (16,50).

5. Méthode selon l'une des revendications précédentes, dans laquelle ladite phase de mouvement alternatif s'accompagne d'une phase d'application d'un champ magnétique variable audit arc.

6. Méthode pour souder une rangée de tubes selon l'une des revendications précédentes, dans laquelle l'arc (18,56) est généré par une torche (92) à arc électrique se déplaçant le long d'un cheminement permettant de toucher lesdites extrémités de tube (14,40,76) l'une après l'autre à partir d'une position de départ jusqu'à une position d'arrivée pour ladite rangée tandis qu'un courant électrique passe entre ladite torche et ladite rangée pour créer un arc de soudage suffisant pour souder lesdits joints, ledit arc touchant au moins une partie desdits joints le long dudit cheminement pour souder lesdites extrémités de tube audit collecteur sur une largeur de bande de soudage près dudit cheminement, et en ce que, simultanément avec ledit déplacement (a), un champ magnétique est appliqué dans la région dudit arc pour contrôler ladite largeur de bande de soudage.

7. Méthode selon l'une des revendications 1 à 6, dans laquelle ledit arrangement comprend au moins une rangée d'extrémités de tube (44,46,48) ladite rangée pouvant généralement être mise parallèlement à la direction-x dans un plan x-y, ladite rangée ayant une largeur de rangée dans la direction-y et ladite méthode comprenant les phases supplémentaires de :
(a) mouvement de ladite torche de soudage (92) le long d'un cheminement choisi dans la direction-x commençant avec le premier tube choisi de ladite rangée et finissant avec le dernier tube choisi de ladite rangée, ledit champ magnétique ayant une densité du flux choisi de façon à produire une largeur de bande de soudage qui s'étend sur une partie de ladite rangée choisie ;
(b) après avoir touché le dernier tube choisi, commande de ladite torche de soudage (92) dans la direction-y jusqu'à une certaine distance choisie ;
(c) après cette commande, déplacement de ladite torche de soudage (92) le long du cheminement suivant pratiquement parallèle audit premier cheminement mais décalé dans la direction-y de ladite distance choisie pour souder lesdits joints dans la bande de soudage suivante décalée dans la direction-y de ladite distance choisie ;
(d) poursuite de ce déplacement de la torche de soudage (92) dans la direction-x sur lesdites extrémités de tube (14,40,76) et commande de ladite torche de soudage de nouveau dans la direction-y après chaque cheminement, de cette façon, lesdits joints sont soudés sur la largeur desdites rangées.

8. Méthode selon la revendication 7, dans laquelle la torche de soudage (92) est déplacée dans la direction opposée, après chaque phase de commande de déplacement de la torche à une distance choisie, pour faire osciller la torche d'avant en arrière au-dessus desdites extrémités de tube (14,40,76).

9. Méthode selon la revendication 8, dans laquelle ladite bande de soudage associée à un premier cheminement se superpose avec une bande de soudage associée au cheminement suivant dans la direction opposée.

10. Méthode selon la revendication 7, dans laquelle la largeur de ladite bande de soudage est contrôlée par l'application dudit champ magnétique par rapport à la largeur des rangée desdites extrémités de tube pour souder lesdits joints dans un seul balayage d'avant en arrière.

11. Méthode selon la revendication 8 ou 9, caractérisée en ce que ledit arrangement comprend de plus un ensemble de rangées d'extrémités de tube parallèles disposées en colonnes, lesdites rangées pouvant s'aligner selon la direction-x et lesdites colonnes dans la direction-y, et ladite méthode comprenant les phases supplémentaires suivantes :
(a) piloter ladite torche de soudage (92) vers la rangée suivante dans la direction-y après que la rangée précédente ait été soudée ;
(b) soumettre ladite rangée suivante audit mouvement d'avant en arrière ; et
(c) continuer les phases (a) et (b) jusqu'à ce que lesdites rangées et lesdites colonnes d'extrémités de tube soient soudées.

12. Méthode selon l'une des revendications précédentes, dans laquelle ladite extrémité de tube (14,40,76) a une section transversale ovale, ledit ovale ayant un grand et un petit diamètres extérieurs, et un ensemble de tubes dans un arrangement rectangulaire de trois rangées (44,46,48), chaque rangée ayant une largeur correspondant généralement au grand diamètre dudit ovale, et ladite phase de déplacement comprenant la phase de déplacement de ladite électrode le long d'une desdites rangées choisie à partir d'une première extrémité choisie de ladite rangée jusqu'à la dernière extrémité de tube choisie de ladite rangée dans une direction correspondante au petit diamètre extérieur desdites extrémités de tube, et ledit arc étant déplacé d'avant en arrière à des distances suffisantes pour couvrir ledit grand diamètre et souder chacun desdits tubes audit collecteur au niveau dudit périmètre par un seul passage de ladite électrode au niveau de ladite extrémité de tube.

## Claims

1. A method for welding a set of tubes on to a tube plate (12, 42, 72), in which a tube end (14, 40, 76), defined by the end of the tube, projects through a hole in the said plate so as to form an assembly joint (16, 50) for the welding of the said tube to the said plate in the zone of the said hole, the said method comprising the following phases:
(a) displacement of an electric arc (18, 56) in a selected direction (26) along a path to be traversed in order to form a weld along the said assembly joints where the said arc touches the said joints;
(b) simultaneously with phase (a), animation of the arc in alternate back and forth motion in a direction (28) at right angles with respect to the said selected direction, with an amplitude (30, 32) of the back and forth motion sufficient to touch at least part of the said joint placed on at least one side of the said path, in order further to form a surface welded along the said joint while the said arc is being displaced in the said selected direction, whereby the welding of at least part of the said joint can take place on the side as well as along the said path;
(c) animation of the arc (18, 56) in back and forth motion on each side of the said path with an amplitude sufficient to weld the said joint fully around the said end of the tube, the said tube being formed around a central axis (38), and the said path being generally centred so as to pass through the said axis adjacent to the said tube end.

2. A method according to Claim 1, in which a set of tubes having an end (14, 40, 76) projecting through the said plate (12, 42, 72) is to be welded to the said plate, and the said path is chosen so as to permit the said arc (18, 56) to touch the said tube ends one after the other.

3. A method according to Claim 1 or Claim 2, in which the said set of tubes defines a regular arrangement and the said path is chosen so as to correspond to the said arrangement, whereby to enable the said arc (18, 56) to touch the said tube ends (14, 40, 76) in succession.

4. A method according to one of the preceding Claims, in which the said tube ends (14, 40, 76) are disposed in a rectangular arrangement defining a set of rows of tube ends (44, 46, 48), and the said path is chosen to be such that the said arc (18, 56) is displaced along a first row and then along the other rows in succession, the said amplitude being sufficient for the welding of each tube end to the said plate around the whole of each assembly joint (16, 50).

5. A method according to one of the preceding Claims, in which the said phase of alternate motion is accompanied by a phase in which a variable magnetic field is applied to the said arc.

6. A method according to one of the preceding Claims for welding a row of tubes, in which the arc (18, 56) is generated by an electric arc torch (92) which is displaced along a path enabling the said tube ends (14, 40, 76) to be touched one after the other, going from a starting position to a final position for the said row, while an electric current passes between the said torch and the said row so as to generate a welding arc sufficient to weld the said joints, with the said arc touching at least part of the said joints along the said path, so as to weld the said tube ends to the said header plate over a weld strip width close to the said path, and in that, simultaneously with the said displacement (a), a magnetic field is applied in the region of the said arc so as to control the said weld strip width.

7. A method according to one of Claims 1 to 6, in which the said arrangement comprises at least one row of tube ends (44, 46, 48), with the said row being generally capable of being set parallel to the x direction in an x-y plane, the said row having a row width in the y direction, and the said method comprises the additional phases of:
(a) moving the said welding torch (92) along a path selected in the x direction, starting with the first tube selected in the said row and finishing with the last tube selected in the said row, the said magnetic field having a flux density so chosen as to produce a weld strip width which extends over part of the selected said row;
(b) after the last selected tube has been touched, controlling the said welding torch (92) in the y direction up to a preselected distance;
(c) after this controlling phase, displacing the said welding torch (92) along the next path, for practical purposes parallel to the said first path but offset in the y direction by the said selected distance, so as to weld the said joints in the next weld strip offset in the y direction by the said selected distance;
(d) continuing this displacement of the welding torch (92) in the x direction over the said tube ends (14, 40, 76), and controlling the said welding torch anew in the y direction after each traverse of the path, whereby the said joints are welded over the width of the said rows.

8. A method according to Claim 7, in which the welding torch (92) is displaced in the opposite direction after each phase of controlled displacement of the torch over a selected distance, so that the torch is caused to oscillate back and forth above the said tube ends (14, 40, 76).

9. A method according to Claim 8, in which the said welding strip associated with a first path is superimposed with a weld strip associated with the next path in the opposite direction.

10. A method according to Claim 7, in which the width of the said weld strip is controlled by the application of the said magnetic field with respect to the width of the rows of said tube ends, so that the said joints are welded in a single back and forth sweep.

11. A method according to Claim 8 or Claim 9, in which the said arrangement further includes a set of rows of parallel tube ends disposed in columns, with the said rows being alignable in the x direction and the said columns in the y direction, and the said method comprising the following supplementary phases:
(a) leading the said welding torch (92) towards the next row in the y direction after the preceding row has been welded;
(b) subjecting the said next row to the said back and forth movement; and
(c) continuing phases (a) and (b) until the said rows and the said columns of tube ends have been welded.

12. A method according to one of the preceding Claims, in which the said tube end (14, 40, 76) has an oval transverse cross section, the said oval having a major external diameter and a minor external diameter, and a set of tubes in a rectangular arrangement of three rows (44, 46, 48), with each row having a width that corresponds generally to the major diameter of the said oval, and the said displacement phase comprising the phase of displacement of the said electrode along a selected one of the said rows, going from a selected first end in the said row to the selected final tube end in the said row in a direction corresponding to the minor external diameter of the said tube ends, and the said arc being displaced back and forth over distances sufficient to cover the said major diameter and to weld each of the said tubes to the said header plate at the level of the said perimeter in a single passage of the said electrode at the level of the said tube end.

## Patentansprüche

1. Verfahren zum Schweißen einer Gesamtheit von Rohren an einer Rohrplatte (12, 42, 72), bei dem ein Rohrende (14, 40, 76), das aus dem Ende des Rohrs besteht, durch eine Öffnung der besagten Platte vorsteht, um eine Verbindungsfuge (16, 50) zu bilden, um das besagte Rohr an der besagten Platte in der Zone der besagten Öffnung zu verschweißen, wobei das besagte Verfahren die folgenden Phasen umfaßt:
a) Bewegung eines Lichtbogens (18, 56) in einer ausgewählten Richtung (26) entlang einem Weg, der zu durchlaufen ist, um eine Schweißverbindung entlang den besagten Verbindungsfugen auszuführen, wo der besagte Lichtbogen die besagten Verbindungsfugen berührt;
b) gleichzeitig mit Phase (a) erfolgende Führung des Lichtbogens in einer Pendelbewegung von vorn nach hinten in einer Richtung (28), die senkrecht im Verhältnis zu der besagten ausgewählten Richtung verläuft, mit einer ausreichenden Amplitude (30, 32) der Pendelbewegung, um wenigstens einen Teil der besagten Verbindungsfuge zu erreichen, der wenigstens auf einer Seite des besagten Wegs angeordnet ist, um zusätzlich eine Schweißfläche entlang der besagten Fuge zu bilden, während sich der besagte Lichtbogen in der besagten ausgewählten Richtung bewegt, wodurch die Schweißung wenigstens eines Teils der besagten Fuge sowohl auf der Seite als auch längs des besagten Wegs erfolgen kann;
c) Führung des Lichtbogens (18, 56) in einer Pendelbewegung beiderseits des besagten Wegs mit einer ausreichenden Amplitude, um die besagte Fuge vollständig um das besagte Rohrende herum zu verschweißen, wobei das besagte Rohr um eine Mittelachse (38) gebildet ist und wobei der besagte Weg allgemein zentriert ist, so daß er durch die besagte Achse verläuft, die an das besagte Rohrende angrenzt.

2. Verfahren nach Anspruch 1, bei dem eine Gesamtheit von Rohren mit einem durch die besagte Platte (12, 42, 72) vorstehenden Rohrende (14, 40, 76) an der besagten Platte verschweißt werden soll und bei dem der besagte Weg so gewählt wird, daß der besagte Lichtbogen (18, 56) die besagten Rohrenden nacheinander berühren kann.

3. Verfahren nach einem der Ansprüche 1 oder 2, bei dem die besagte Gesamtheit von Rohren eine regelmäßige Anordnung bildet und bei dem der besagte Weg so gewählt wird, daß er der besagten Anordnung entspricht, damit der besagte Lichtbogen (18, 56) nacheinander die besagten Rohrenden (14, 40, 76) berühren kann.

4. Verfahren nach einem der vorangehenden Ansprüche, bei dem die besagten Rohrenden (14, 40, 76) in einer rechteckigen Anordnung mit Bildung einer Gesamtheit von Rohrendenreihen (44, 46, 48) angeordnet sind und bei dem der besagte Weg so gewählt wird, daß sich der besagte Lichtbogen (18, 56) entlang einer ersten Reihe und anschließend nacheinander entlang den anderen Reihen bewegt, wobei die besagte Amplitude ausreichend ist, damit jedes Rohrende an der besagten Platte vollständig um jede Verbindungsfuge (16, 50) herum verschweißt wird.

5. Verfahren nach einem der vorangehenden Ansprüche, bei dem die besagte Pendelbewegungsphase mit einer Phase zur Anwendung eines veränderlichen Magnetfelds auf den besagten Lichtbogen einhergeht.

6. Verfahren zum Schweißen einer Rohrreihe nach einen der vorangehenden Ansprüche, bei dem der Lichtbogen (18, 56) durch einen Lichtbogenbrenner (92) erzeugt wird, der sich entlang einem Weg bewegt, auf dem er die besagten Rohrenden (14, 40, 76) nacheinander von einer Ausgangsposition bis zu einer Endposition für die besagte Rohrreihe berühren kann, während ein elektrischer Strom zwischen dem besagten Brenner und der besagten Rohrreihe fließt, um einen ausreichenden Schweißlichtbogen zum Schweißen der besagten Fugen zu erzeugen, wobei der besagte Lichtbogen wenigstens einen Teil der besagten Fugen entlang dem besagten Weg berührt, um die besagten Rohrenden am Sammler auf einer Schweißbandbreite in der Nähe des besagten Wegs zu verschweißen, und wobei gleichzeitig mit der besagten Bewegung (a) ein Magnetfeld im Bereich des besagten Lichtbogens angewendet wird, um die besagte Schweißbandbreite zu regeln.

7. Verfahren nach einem der Ansprüche 1 bis 6, bei dem die besagte Anordnung wenigstens eine Reihe von Rohrenden (44, 46, 48) enthält, wobei die besagte Reihe allgemein parallel zur x-Richtung in einer x/y-Ebene verlaufen kann, wobei die besagte Reihe eine Reihenbreite in y-Richtung aufweist und wobei das besagte Verfahren zusätzlich die folgenden Phasen umfaßt:
(a) Bewegung des besagten Schweißbrenners (92) entlang einem ausgewählten Weg in x-Richtung, beginnend mit dem ausgewählten ersten Rohr der besagten Reihe und endend mit dem ausgewählten letzten Rohr der besagten Reihe, wobei das besagte Magnetfeld eine Flußdichte besitzt, die so gewählt wird, daß eine Schweißbandbreite entsteht, die sich auf einem Teil der besagten ausgewählten Reihe erstreckt;
(b) nach der Berührung des letzten ausgewählten Rohres erfolgende Steuerung des besagten Schweißbrenners (92) in y-Richtung bis zu einem bestimmten ausgewählten Abstand;
(c) nach dieser Steuerung erfolgende Bewegung des besagten Schweißbrenners (92) entlang dem folgenden Weg, der praktisch parallel zu dem besagten ersten Weg verläuft, aber in y-Richtung um den besagten ausgewählten Abstand versetzt ist, um die besagten Fugen in dem folgenden Schweißband zu schweißen, das in y-Richtung um den besagten ausgewählten Abstand versetzt ist;
(d) Fortführung dieser Bewegung des Schweißbrenners (92) in x-Richtung an den besagten Rohrenden (14, 40, 74) und erneut Steuerung des besagten Schweißbrenners in y-Richtung nach jedem so zurückgelegten Weg, wobei die besagten Fugen auf der Breite der besagten Reihen geschweißt werden.

8. Verfahren nach Anspruch 7, bei dem der Schweißbrenner (92) in entgegengesetzter Richtung nach jeder Phase zur Bewegungssteuerung des Brenners um einen ausgewählten Abstand bewegt wird, um den Brenner von vorn nach hinten über den besagten Rohrenden (14, 40, 76) schwingen zu lassen.

9. Verfahren nach Anspruch 8, bei dem sich das besagte Schweißband, das zu einem ersten Weg gehört, mit einem Schweißband überlagert, das zum folgenden Weg in entgegengesetzter Richtung gehört.

10. Verfahren nach Anspruch 7, bei dem die Breite des besagten Schweißbands durch die Anwendung des besagten Magnetfelds im Verhältnis zur Breite der Reihen der besagten Rohrenden geregelt wird, um die besagten Fugen in einer einzigen Ablenkung von vorn nach hinten zu schweißen.

11. Verfahren nach Anspruch 8 oder 9, bei dem die besagte Anordnung außerdem eine Gesamtheit von parallelen Rohrendenreihen enthält, die in Kolonnen angeordnet sind, wobei die besagten Reihen in x-Richtung und die besagten Kolonnen in y-Richtung verlaufen und wobei das besagte Verfahren zusätzlich die folgenden Phasen umfaßt:
(a) Steuerung des besagten Schweißbrenners (92) zur folgenden Reihe in y-Richtung, nachdem die vorangehende Reihe geschweißt worden ist;
(b) Ausführung der besagten Bewegung von vorn nach hinten an der besagten folgenden Reihe;
(c) Fortführung der Phasen (a) und (b), bis die besagten Reihen und die besagten Kolonnen von Rohrenden verschweißt sind.

12. Verfahren nach den vorangehenden Ansprüchen, bei dem das besagte Rohrende (14, 40, 76) einen ovalen Querschnitt besitzt, wobei das besagte Oval einen großen und einen kleinen Außendurchmesser aufweist, und mit einer Gesamtheit von Rohren in einer rechteckigen Anordnung mit drei Reihen (44, 46, 48), wobei jede Reihe eine Breite hat, die allgemein dem großen Durchmesser des besagten Ovals entspricht, und wobei die besagte Bewegungsphase die Phase zur Bewegung der besagten Elektrode entlang einer ausgewählten der besagten Reihen enthält, ausgehend von einem ersten ausgewählten Ende der besagten Reihe bis zum letzten ausgewählten Rohrende der besagten Reihe in einer Richtung, die dem kleinen Außendurchmesser der besagten Rohrenden entspricht, und wobei der besagte Lichtbogen von vorn nach hinten in ausreichenden Abständen bewegt wird, um den besagten großen Durchmesser abzudecken und jedes der besagten Rohre am Sammler in Höhe des besagten Umfangs in einem einzigen Durchgang der besagten Elektrode in Höhe des besagten Rohrendes zu verschweißen.
